# EUROPEAN PATENT APPLICATION

(11) **EP 1 306 151 A1**
(43) Date of publication of application: **02.05.2003**
(21) Application number: 01830666.2
(22) Date of filing: 23.10.2001
(51) Int. Cl.: B23B 31/107, B23B 29/034

(54) **Tool holder**

(71) Applicant: Micromeccanica Di Precisione S.r.l., 23892 Bulciago (IT)
(72) Inventor: Molteni, Giovanni, 23892 Bulciago (Lecco) (IT)
(74) Representative: Siniscalco, Fabio

(57) **Abstract**

A tool holder (20) is provided with a socket which is eccentric with respect to the axis (XX) of rotation of the tool holder (20) and which can engage with a tool (100) provided with a cutting edge (200) eccentric with respect to the longitudinal axis (JJ) of the tool (100). The holder also comprises an adjusting screw (60) associated with a ring gear (52) for rotating the tool (100) in such a way that rotation of the screw (60) results in a predetermined rotation of the tool (100) about its longitudinal axis (JJ), and consequently in a variation of the distance of the cutting edge (200) from the axis of rotation (XX) so to enable the machining of holes of different diameters. The holder (20) also comprisises pins (76) for locking the tool (100) in a specified position.

## Description

The present invention relates to a tool holder designed to be fitted, in association with a tool, on machine tools such as reaming machines, grinders, milling machines and the like, in order to finish the machining of holes, bringing them to the desired diameter while providing the requisite tolerances and/or the specified surface finish.

At the present time, in the field of machining to produce holes with very strict tolerances, generally specified with respect to the dimension of diameter, at least two successive machining operations are normally carried out.

The first machining operation is designed to form the actual hole, using a wide range of different methods, from piercing workpieces by means of drill bits to forming by means of cores where the workpiece is produced by casting.

The first machining operation is designed to produce holes having a diameter less than the final diameter, without any control of the tolerances of the machining or of the roughness of the hole wall.

The second machining operation consists of the finishing of the previously produced hole, generally by means of reaming or grinding machines which provide particularly precise machining tolerances and excellent surface finish.

The reaming of the hole consists in the removal of excess metal from the original hole, to produce holes of the desired diameter. At the same time, the high speed and small forward movements by which the excess metal is removed ensure that the roughness of the hole walls is limited.

Clearly, in reaming operations it is necessary to have a large number of reaming tools to enable holes of different diameters to be finished. Each conventional tool, which has no device for adjusting the position of the cutting edge, can finish holes of one diameter only.

This inevitably makes it necessary to have a wide range of reaming tools available, which differ as to the diameters which can be created. These tools are generally rather expensive, since they are made in such a way as to facilitate particularly precise machining tolerances and high-speed machining.

There is a trend in the field of reaming tools to make tools consisting of a tool holder provided with devices for adjusting the eccentricity of the cutting edge of the tool with respect to the axis of the tool holder.

The document DE4102529 discloses a tool holder for grinding holes, provided with a device, comprising a screw and gear system, for adjusting the eccentricity of the cutting edge of the tool with respect to the axis of rotation of the holder.

In the cited document, the holder to be inserted into the chuck of the machine tool receives a bush which is eccentric with respect to the axis of rotation of the holder, and is made elastic by axial cuts within which the tool is mounted in line with the said bush. The chuck of the machine tool is tightened on the holder and on the elastic bush, enabling the tool to be gripped essentially by means of a frictional joint between cylindrical surfaces.

In the cited document, the frictional force responsible for securing the tool arises from the interaction of the holder with the chuck of the machine tool.

The aforesaid embodiment has the disadvantage that the tool has to be secured in the desired angular position with respect to the holder by engaging the chuck of the machine tool. When the holder has to be detached from the machine tool, in order to fit a different tool for example, the frictional force is removed, making the connection between the tool and the holder smooth, and consequently moving the tool from the predetermined angular position, or in other words modifying in an undesired way the eccentricity of the cutting edge of the tool with respect to the axis of the holder (coinciding with the axis of rotation).

Therefore, the described solution makes it necessary to check, and to adjust if required, the eccentricity of the cutting edge of the tool whenever the holder is fitted into the jaws of the chuck.

At the present time, the trend in the field of machining with machine tools, and particularly in the field of precision machining, such as reaming, is to use tools which are easily mounted on the machine tool in a pre-adjusted state, and which do not require adjustments which would increase the tool setting time and thus increase the down time of the machine tool.

The problem to which the present invention relates is that of devising a tool holder with adjustable eccentricity of the tool, which has structural and functional characteristics which meet the aforesaid requirements and simultaneously overcome the disadvantages mentioned above.

This problem is resolved with a tool holder having a body which extends essentially about an axis of rotation, provided with a socket which is eccentric with respect to the axis of rotation of the holder, and suitable for being engaged with a tool which extends about a longitudinal axis, which can be associated with the holder, and which is provided with a cutting edge which is eccentric with respect to the said longitudinal axis, the said holder additionally comprising means of adjusting the eccentricity of the cutting edge, these means being suitable for making the said tool rotate in the socket which houses it, the said rotation taking place with respect to the longitudinal axis of the tool, in such a way that one rotation of the tool results in a predetermined variation of the eccentricity of the cutting edge with respect to the axis of rotation of the body of the tool holder; the said holder being characterized in that it additionally comprises means for connecting the tool securely to the body of the holder and suitable for locking the tool in a specified position with respect to the body of the holder.

Further characteristics and the advantages of the holder according to the present invention will be made clear by the following description of a preferred example of embodiment of the invention, provided for guidance and without restrictive intent, with reference to the attached figures, in which:

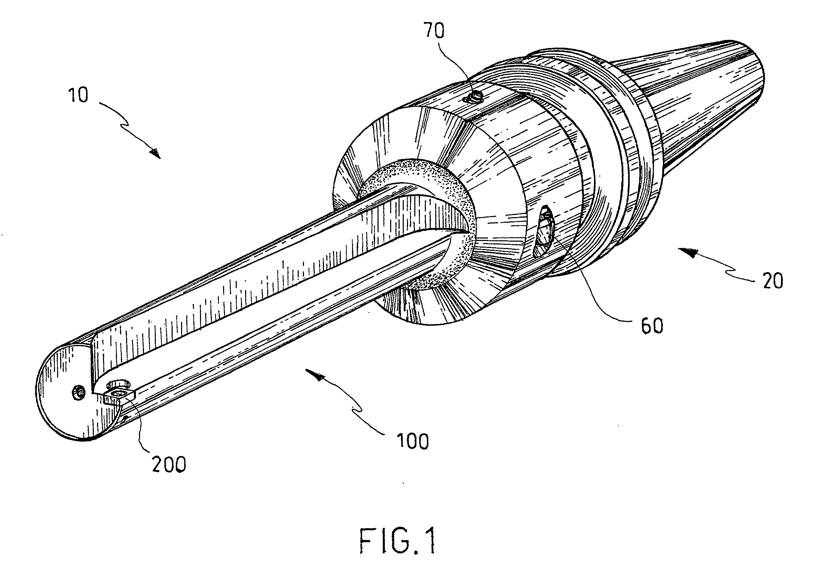

Figure 1 shows a perspective view of an assembly consisting of a tool holder associated with a tool;

Figure 2 shows a perspective view in exploded form of the tool holder and of the tool of Figure 1;

Figure 3 shows a first side view of the holder of Figure 1;

Figure 4 shows a second side view of the holder of Figure 1;

Figure 5 shows a sectional view of the holder and of the tool of Figure 1;

Figure 6 shows a section through a plane A-A of the holder of Figure 3;

Figure 7 shows a section through a plane B-B of the holder of Figure 3;

Figure 8 shows a plan view of a ring gear and a screw for adjustment;

Figure 9 shows a side view, in partial section, of the ring gear and adjusting screw of Figure 8;

Figure 10 shows a perspective view of the tool of Figure 1 and of the adjusting screw associated with the ring gear of Figure 8;

Figure 11 shows a side view, in partial section, of the tool of Figure 1.

With reference to the attached figures, the number 10 indicates the whole of a tool holder 20 associated with a tool 100, of the type which can carry out, by means of a cutting edge 200 mounted on the tool 100, finishing operations, such as reaming and the like, on holes.

In order to carry out the aforesaid operations, the holder 20 is mounted, by means of suitable devices, in the socket (not shown) of a chuck of a machine tool such as a reaming machine or grinding machine.

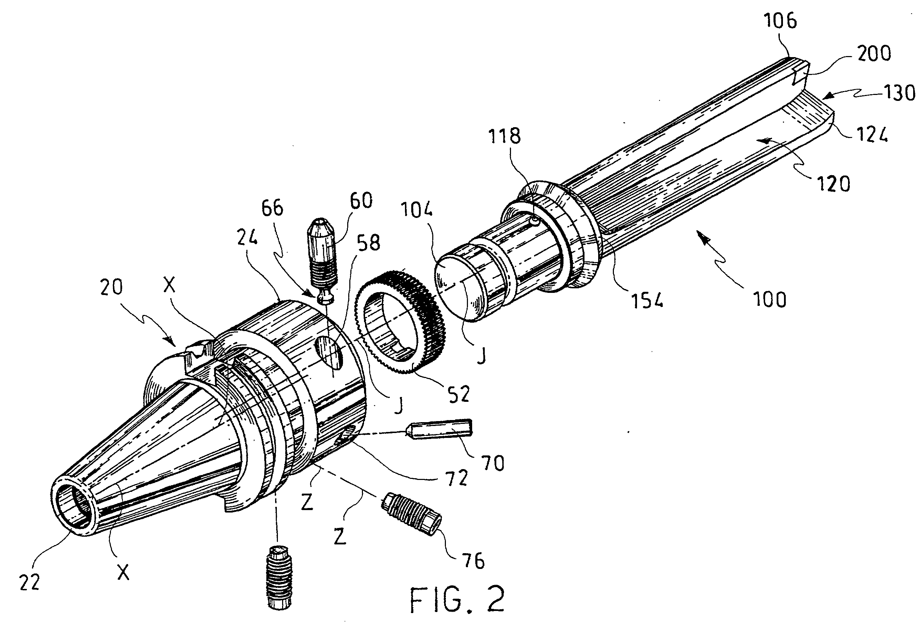

The holder extends along an axis X-X (Figure 2). The said axis and the axis of the socket provided in the machine tool form a single axis of rotation in the configuration in which the holder is mounted on the machine.

The holder 20 extends from a first end 22, located in the part of the holder which is engaged with the socket of the chuck of the machine tool, to a second end 24 located in the part of the holder which interacts with the tool.

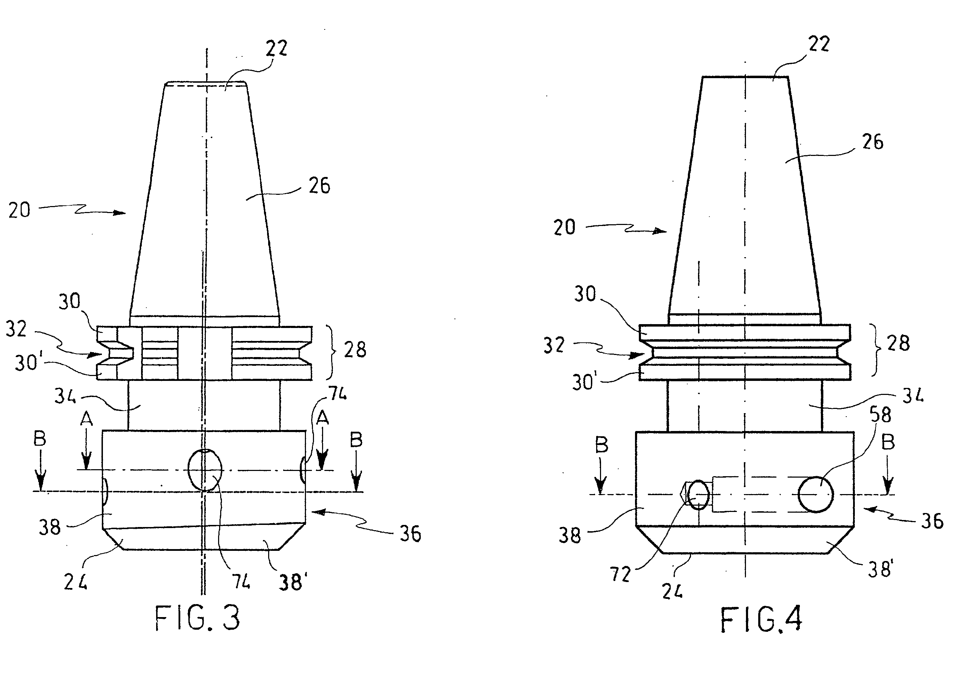

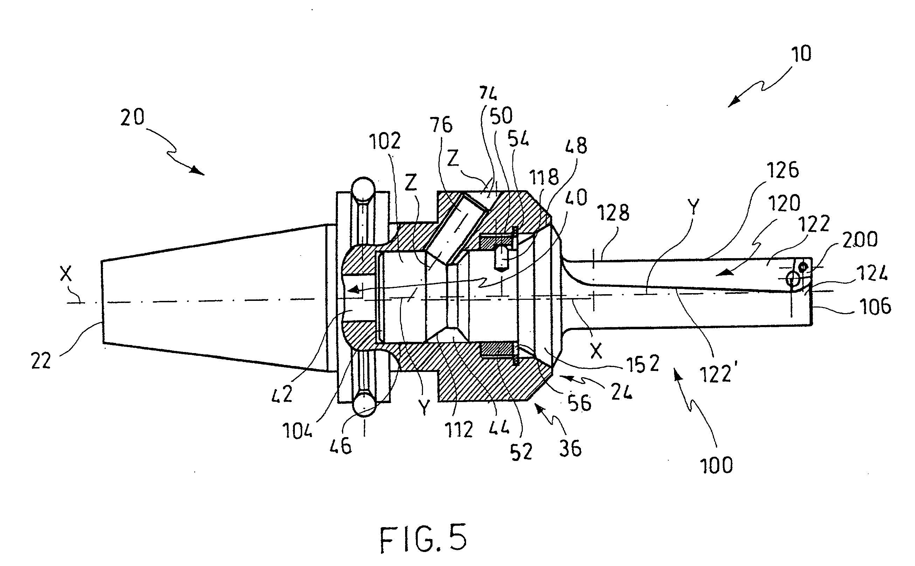

From the first end 22 towards the second end 24, the body of the holder 20 comprises a mounting cone 26, of essentially truncated conical shape, followed by an attachment collar 28 (Figure 3 and Figure 4).

The attachment collar 28 has two annular projections 30 and 30', spaced apart in such a way as to form and delimit an annular groove 32.

The mounting cone 26 forms a surface for profile coupling to the socket of the chuck of the machine tool and the said attachment collar 28, and can interact with means of closing the chuck of the machine tool, in order to retain the holder 20 in the chuck of the machine tool.

Clearly, the mounting cone 26 and the attachment collar 28 form a preferred example of embodiment of the means of mounting the holder in the chuck. The embodiment of these as described is not restrictive, and, as a person skilled in the art will know, there are possible variants such as a mounting cone provided with longitudinal grooves or projections, a cylindrical mounting surface, a differently shaped collar, and the like.

From the first end 22 towards the second end 24 of the body of the holder 20, and after the attachment collar 28, a generally smooth cylindrical surface 34, whose diameter is less than the diameter of the attachment collar, is formed.

Adjacent to the cylindrical surface 34, the body of the holder 20 has an annular body 36, having an external diameter which is greater than the diameter of the cylindrical surface 34.

The annular body 36 is externally shaped in the form of a first cylindrical portion 38 and a second truncated conical portion 38', close to the second end 24 of the body of the holder 20 and tapered towards the said end.

The body 20 of the holder is internally hollow, preferably in a continuous way, from the first end 22 to the second end 24. In other words, the body of the holder has a cavity 40 in which are formed a first portion 42, close to the first end 22 of the holder, and a second portion, adjacent to the first and close to the second end 24 of the holder, which forms a socket for the tool 44 (Figure 5).

The first portion 42 of the cavity 40 is generally cylindrical, with a uniform diameter, partially threaded and in line with the axis of rotation X-X of the holder 20. The said portion provides further means of attaching the body of the holder 20 to the chuck of the machine tool.

The tool socket 44, of essentially cylindrical shape, extends about an axis Y-Y which is eccentric with respect to the axis of rotation X-X of the holder 20. Preferably, the said eccentric axis Y-Y has an eccentricity in the range from 0.5 mm to 2 mm, and, in a preferred embodiment, is equal to 1 mm.

The said socket 44 is provided with a sequence of axial grooves. In a preferred embodiment, the sequence of the said grooves comprises a guide socket 46 for a shank 102 of the tool, which determines the radial position of the tool 100, this position being eccentric with respect to the axis of rotation X-X.

At the second end 24 of the holder 20, the sequence of axial grooves has a flared portion 48 which, by bearing on an opposing bearing surface 152 of the shank 102 of the tool 100, determines an axial positioning of the tool with respect to the body of the holder.

Between the guide socket 46 in the body 20 of the holder and the flared portion 48 of the said body, the tool socket 44 has a containing space 50, formed in the cavity 40 of the body of the holder at the position of the annular body 36, in such a way that it is completely contained in the said annular body.

The containing space 50 can receive a ring gear 52, and forms a seat for the said ring gear.

The ring gear 52 is housed in the containing space 50 in such a way that it is free to rotate therein and is retained in the said space by a ring 54, generally of the circlip type, fitted in a suitable circumferential groove 56.

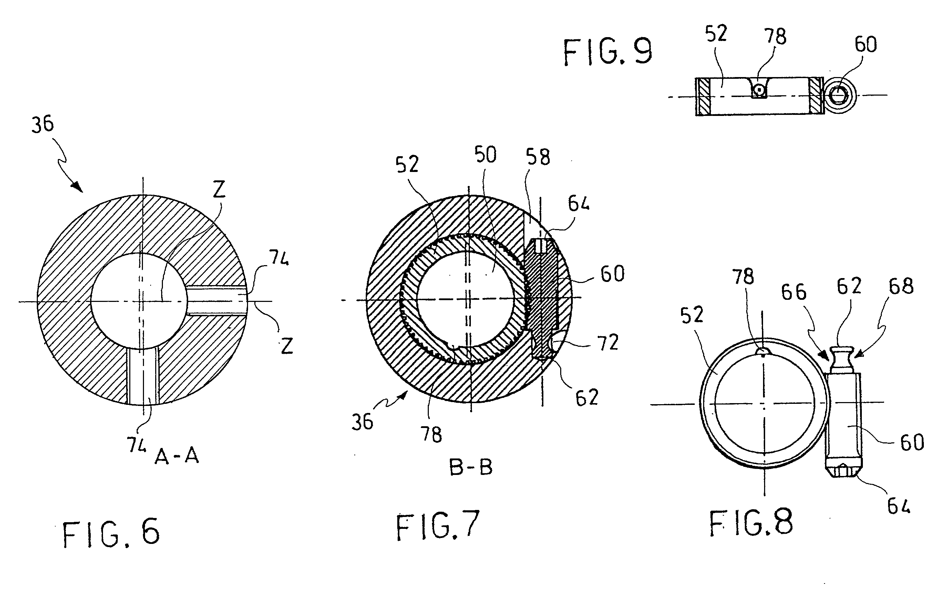

The containing space 50 communicates with a tangential hole 58, formed through the annular body 36, in such a way that the containing space 50 and the surface of the tangential hole 58 intersect peripherally (Figure 4 and Figure 7).

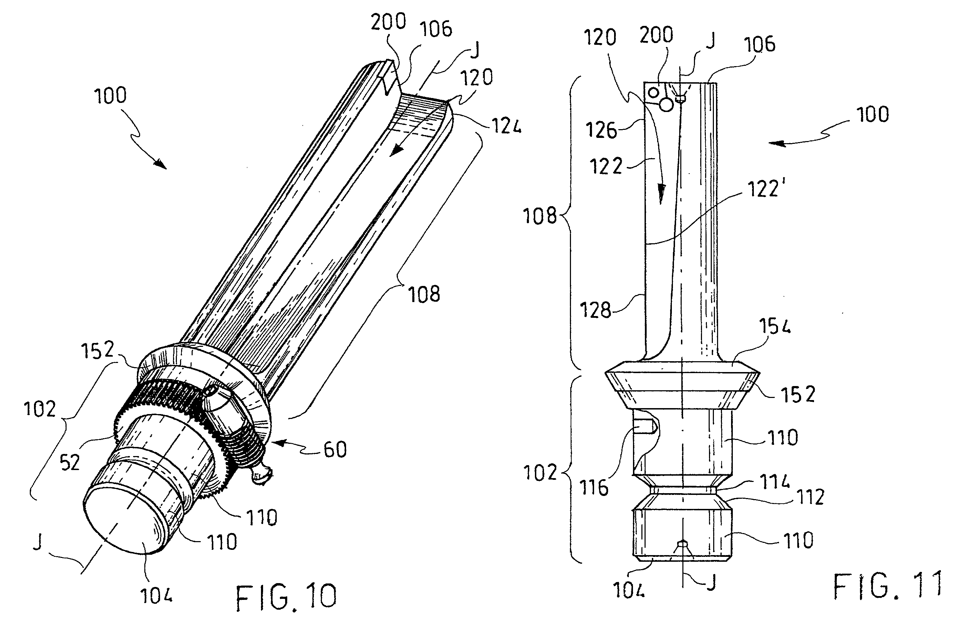

The tangential hole 58 houses, in a freely rotatable way, an adjusting screw 60 which is coupled for operation to the ring gear 52 (Figure 7, Figure 8 and Figure 9).

The adjusting screw 60 is provided, in its terminal part 62 opposite the screw head 64, with a play compensation head 66. The said play compensation head 66 consists of a cylindrical body positioned in line with the screw 60, provided with a concave surface 68, which can receive a positioning dowel 70, preferably provided with a slightly conical and threaded external surface (Figure 2, Figure 4 and Figure 7).

The positioning dowel 70 is housed in a transverse hole 72, formed through the annular body 36. The said transverse hole 72 extends along an axis W-W which is essentially perpendicular to the axis of the tangential hole 58, which houses the adjusting screw 60.

The said transverse hole 72 is located near the terminal part of the tangential hole 58, in such a way that the positioning dowel 70 is housed on the external concave surface 68 of the play compensation head 66 of the adjusting screw 60, thus coming into contact with the said concave surface and keeping the adjusting screw 60 in a predetermined position while permitting the free rotation of the said screw.

The containing space 50, the ring gear 52, the adjusting screw 60 and the tangential hole 58, the positioning dowel 70 and the transverse hole 72 form means of adjusting the eccentricity of the cutting edge 200 mounted on the tool 100.

Clearly, the extension of the ring gear 52 (whole ring, half ring and the like) or the type of toothing of the ring gear (helical, straight tooth and the like), the number of teeth or their geometrical characteristics (module, characteristic angle and the like), and the types of screws and dowels can be varied, without departure from the scope of the present patent.

The annular body 36 is additionally provided with a plurality of through holes 74 passing from the outer surface of the said body to the tool socket 44 (Figures 3, 5 and 6).

The said holes 74 extend about axes Z-Z which are preferably inclined with respect to the axis of rotation X-X of the body of the holder 20. Each hole 74 houses a connecting pin 76, which is generally threaded and can be screwed into the said hole.

In a preferred embodiment of the holder 20, the annular body 36 has two holes 74 with inclined axes. The inclination of the axes of the holes with respect to the axis of rotation X-X is generally in the range from 40° to 70°, and is preferably equal to 55°.

The axes of the two through holes 74 are spaced apart by an angular distance which is generally in the range from 60° to 180°, and is preferably equal to 90°.

In one embodiment of the holder 20, the through holes 74 which house the connecting pins 76 are located on the annular body 36 in essentially opposing positions with respect to the tangential hole 58 which houses the adjusting screw 60 and with respect to the transverse hole 72 which houses the positioning dowel 70.

The through holes 74, formed in the annular body 36 of the holder 20, and the connecting pins 76 associated with them, form releasable means of connecting the tool 100 securely to the body of the holder 20.

The number of through holes 74, the diameters of the said holes, and the type of connecting pins 76 (with cylindrical, concave, socket or hexagonal heads, without heads, captive, and the like) constitute different embodiments of the present invention and can also be provided in the form of other embodiments, without any special requirements as to construction and manufacture.

The tool 100 is made in such a way that it can be associated for operation with the body of the holder 20, by the coupling of a shank 102 of the said tool 100 inside the tool socket 44 provided in the holder. The tool is kept securely fixed to the said body of the holder by the connecting means with which the said holder is provided.

The term "securely fixed" signifies that the aforesaid removable or releasable connecting pins prevent relative movement between the tool and the holder during the specified operations of machining a workpiece, for example a reaming process.

The tool 100 extends from a connecting end 104, in the part associated with the holder 20, to a free or head end 106, in the part which supports the cutting edge 200 (Figures 2, 5, 10 and 11).

From the connecting end 104 to the head end 106, the tool comprises the shank 102 and a neck 108, both of which extend along a longitudinal axis J-J. In the configuration formed by the mounting of the tool 100 in the tool socket 44, the axis J-J coincides with the axis of the tool socket Y-Y.

From the connecting end 104 towards the head end 106, the shank 102 of the tool has a guide surface 110, which is connected to the corresponding guide socket 46 of the tool socket 44.

The said guide surface 110 is interrupted by a thrust surface 112, of truncated conical shape, terminating in a cylindrical release surface 114 which is connected to a further portion of the guide surface 110.

The guide surface 110 of the tool 100 is provided with an insertion hole 116, in which is housed or inserted a plug 118 which interacts, in the configuration formed by the mounting of the tool 100 on the holder 20, with a suitable driving socket 78 for the tool, formed inside the ring gear 52.

The plug 118 and the driving socket 78 represent a preferred but not limiting example of driving means for transmitting to the tool 100 the rotation imparted to the ring gear 52 by the operation of the adjusting screw 60.

The said driving means can be constructed in different forms. By way of example, it is possible to provide on the guide surface 110 of the shank 102 of the tool an axial projection which engages in an axial groove formed inside the ring gear, or an axial projection located inside the ring gear which engages in an axial groove formed on the guide surface of the shank of the tool, or other embodiments having similar functions or functional efficiency.

The shank 102 of the tool terminates, towards the head end 106, in a bearing surface 152, which for example is of truncated conical shape and tapers towards the connecting end 104 of the tool. The said bearing surface 152, which bears on the flared portion 48 of the tool socket 44, positions the said tool axially relative to the body of the holder 20.

The said bearing surface 152 is opposed to a closing surface 154, which is also, for example, of truncated conical shape and tapered towards the head end 106, and which is connected to the neck 108 of the tool.

The neck 108 is essentially cylindrical along the longitudinal axis of the tool. The said neck has a longitudinal channel 120 which cuts into the body of the said neck 108, in such a way that part of the body is removed to form a horizontal wall 122 and a vertical wall 122'. The said walls 122 and 122' preferably extend from the shank 102 of the tool to the head end 106.

In one embodiment, the horizontal wall 122 is contained in a median plane of the neck 108 of the tool, the said median plane containing the longitudinal axis J-J of the tool. On the other hand, the vertical wall 122' is parallel to the said horizontal wall 122, and extends essentially along a plane inclined with respect to the longitudinal axis J-J contained in the median plane A on which the horizontal part 122 lies, in such a way that the said vertical wall 122' is farther from the edge 126 of the horizontal wall 122 in the proximity of the head end 106 of the tool and closer to the edge 128 of the horizontal wall 122 in the proximity of the shank 102.

At the head end 106 of the tool, the vertical wall 122' terminates in a concave surface 130 projecting towards the cutting edge 200 positioned on the wall 122, forming a scraping claw 124.

The scraping claw 124 extends towards the cutting edge 200 in such a way as to incorporate a centring hole formed in the head end 106 of the tool 100.

When made as described above, the horizontal wall 122, the vertical wall 122' and the scraping claw 124 limit the longitudinal channel 120 in such a way as to form a chip removal channel for the material removed during the hole finishing machining.

Before receiving the tool 100, the body of the holder 20 is fitted with the ring gear 52 which is housed in the containing space 50 and held in the said space by means of the elastic ring 54, of the circlip type for example, fitted in the appropriate groove 56 of the tool socket 44.

The adjusting screw 60 is inserted in the tangential hole 58, interacts with the ring gear 52 and is fixed in position by the positioning dowel 70 inserted in the transverse hole 72 and housed in the concave surface 68 of the play compensation head 66 of the screw 60.

The shank 102 of the tool 100 is inserted into the tool socket 44 of the body of the holder 20, in such a way that the driving plug 118 is housed in the driving socket 78 of the ring gear 52.

In this configuration formed by the mounting of the tool 100 in the holder 20, in which the said tool is not gripped in the holder, the means of adjusting the eccentricity of the cutting edge can be operated.

When the adjusting screw 60 is rotated, the ring gear 52 rotates by a predetermined amount, thus causing the tool 100 to rotate about the longitudinal axis J-J which coincides with the axis Y-Y of the tool socket.

The tool is eccentric with respect to the axis of rotation X-X of the holder 20 and the cutting edge 200 is eccentric with respect to the axis J-J of the tool 100. A rotation of the tool about the axis J-J results in a variation of the distance of the cutting edge 200 from the axis of rotation X-X of the holder 20. In other words, a rotation of the tool about the axis J-J changes the diameter which can be worked by the cutting edge.

During the rotation of the adjusting screw 60, the said screw maintains a fixed and predetermined position inside the tangential hole 58 by means of the positioning dowel 70 which retains the said screw 60 axially by remaining in contact with the concave surface 68 of the play compensation head 66 of the screw 60, in which it is housed, while simultaneously allowing the free rotation of the said screw 60.

When the position of the cutting edge 200 with respect to the axis of rotation X-X of the holder 20 has been adjusted, the tool 100 can be retained in the chosen position relative to the body of the holder 20, by acting on the connecting means.

In particular, the connecting pins 76 are screwed into the through holes 74, until they interact with the truncated conical thrust surface 112 of the tool shank.

The interference between the pins 76 and the thrust surface 112 pushes the tool towards the interior of the tool socket 44, bringing the bearing surface 152 against the flared portion 48 of the said tool socket.

The frictional force generated between the said bearing surface and the said flared portion locks the tool 100 in the predetermined position.

The holder 20 and the tool 100, associated securely with the said holder by the aforesaid connecting means, is mounted in the socket of the chuck of the machine tool.

During the use of the holder and tool in the hole finishing machining, the excess metal present in the said holes is removed by the cutting edge and reduced to chip. The chip is collected by the scraping claw 124 of the tool 100, and is channelled along the longitudinal discharge channel 120 until it is expelled outside the hole being machined.

In a novel way, the described tool holder, even though it is provided with means of adjusting the eccentricity of the cutting edge, which enable holes of different diameters to be machined, still enables the tool to be kept in a predetermined position relative to the body of the holder.

In other words, the aforesaid tool holder has the advantage of permitting the adjustment of the eccentricity of the cutting edge with respect to the axis of rotation of the body of the holder, and the locking of the tool in the chosen position without the use of the chuck of the machine tool.

In yet other words, the holder according to the invention permits an "off machine" adjustment of the eccentricity of the cutting edge, for example in a laboratory or in a set-up room remote from dirty and noisy machining areas, in conditions allowing fine and precise adjustment and consequently strict tolerances on the position of the cutting edge, and permits the tool to be locked in these conditions. The holder fitted with the locked tool is then inserted into the appropriate socket of the chuck of the machine tool for the execution of any necessary machining.

The holder according to the invention has the additional advantage of being able to be removed from the machine tool and subsequently re-mounted, without any modification, even accidental, of the position chosen for the tool.

The tool which can be associated with the body of the handle also has the advantage of being connected to the tool socket by a connection of a type which ensures that the position of the tool with respect to the holder is maintained by means of frictional forces.

The tool has the further advantage of facilitating chip removal during the execution of the machining, while maintaining a structural rigidity such that the vibrations of the tool are limited and the desired tolerances on the position of the cutting edge are maintained even during machining.

Finally, the tool has the advantage of being able to receive the centring holes for the execution of operations of grinding the tool itself, in order to provide a tool which enables the required tolerances to be maintained.

Advantageously, it is possible to sell a kit consisting of a holder and one or more tools, which differ from each other in respect of the workable diameter. The user can thus acquire a holder which can be used in association with tools enabling a very wide range of diameters to be machined.

Alternatively, it is possible to sell a kit comprising a plurality of holders, for example one comprising two holders. The first of these holders can be suitable for receiving a tool of the type described, made for carrying out rough machining, and the second can be suitable for a tool for finishing only.

Additionally, it is possible to sell a kit consisting of a plurality of tools, in order to replace worn tools, for example.

Clearly, a person skilled in the art may, in order to meet contingent and specific requirements, make numerous modifications and variations to the tool holder described and illustrated above with reference to the figures, all such modifications and variations being included within the scope of protection of the invention, as defined by the following claims.

## Claims

1. Tool holder having a body (20) which extends essentially about an axis of rotation (XX), provided with a socket (44) which is eccentric with respect to the axis of rotation (XX) of the holder (20), and suitable for being engaged with a tool (100) which extends about a longitudinal axis (JJ), which can be associated with the holder (20), and which is provided with a cutting edge (200) which is eccentric with respect to the said longitudinal axis, the said holder additionally comprising means of adjusting the eccentricity of the cutting edge (200), these means being suitable for making the said tool rotate in the socket (44) which houses it, the said rotation taking place with respect to the longitudinal axis (JJ) of the tool (100), in such a way that one rotation of the tool (100) results in a predetermined variation of the eccentricity of the cutting edge (200) with respect to the axis of rotation (XX) of the body (20) of the tool holder; the said holder being **characterized in that** it additionally comprises means for connecting the tool (100) securely to the body (20) of the holder and suitable for locking the tool in a specified position with respect to the body of the holder.

2. Holder (20) according to Claim 1, in which the means of connecting the tool to the body (20) of the holder comprise a plurality of pins (76) which can be screwed into corresponding through holes (74) extending from the outer surface of the holder to the tool socket (44), in such a way that they interact with a thrust surface (112) of the tool, thus pushing the tool (100) towards the interior of the socket (44) of the holder.

3. Holder (20) according to Claim 2, in which the said thrust surface (112) of the tool is a truncated conical surface on which the said pins (76) act, pushing the tool towards the interior of the socket (44) of the holder, and bringing a bearing surface (152) of the tool to bear against an opposing surface (48) of the body (20) of the holder.

4. Holder according to Claim 3, in which the bearing surface (152) of the tool is shaped in the form of a truncated cone and the said opposing surface of the holder is a flared portion (48) of the body (20) of the holder.

5. Holder (20) according to any of Claims 2 to 4, in which the said through holes (74) have their axes (ZZ) inclined with respect to the longitudinal axis (JJ) of the tool (100).

6. Holder according to Claim 5, in which the inclination of the axis (ZZ) of the through holes (74) with respect to the longitudinal axis (JJ) of the tool is in the range from 40° to 70°.

7. Holder according to Claim 6, in which the inclination of the axis of the through holes with respect to the longitudinal axis of the tool is 55°.

8. Holder according to one of Claims 2 to 7, in which the through holes (74) have an angular spacing in the range from 60° to 180° on a plane transverse with respect to the axis of the holder (XX).

9. Holder according to Claim 8, in which the through holes (74) have an angular spacing of 90°.

10. Holder according to any one of the preceding claims, in which the means of adjusting the eccentricity of the cutting edge (200) comprise an adjusting screw (60) housed in a hole (58) of the holder (20) which is free to rotate in the said hole and operatively associated with a ring gear (52) which can rotate the tool (100), in such a way that one rotation of the screw (60) results in a predetermined rotation of the tool (100) about the longitudinal axis (JJ) of the tool.

11. Holder according to Claim 10, in which the means of adjusting the eccentricity of the cutting edge additionally comprise means of axially retaining the adjusting screw (60) suitable for enabling the rotation of the screw (60) while holding it in a predetermined axial position.

12. Holder according to Claim 11, in which the said means of retaining the screw comprise a head (66) of the screw (60) provided with a concave surface (68) which receives a positioning dowel (70) housed in a transverse hole (72) of the body (20) of the holder.

13. Holder according to one of Claims 10 to 12, in which the means of adjusting the eccentricity of the cutting edge and the means of securely connecting the tool to the body of the holder are housed in an annular body (36) of the holder (20).

14. Holder according to Claim 13, in which a hole in the adjusting means for housing the adjusting screw (60) and a hole (72) for housing a dowel (70) of means of axial retention of the adjusting screw (60) are located essentially opposite through holes (74) of the connecting means.

15. Holder according to one of Claims 10 to 14, in which the ring gear (52) causes the rotation of the tool (100) through drive means, comprising a plug (118) integral with the tool (100) which is coupled to a suitable driving socket (78) of the ring gear (52).

16. Tool (100) for machining, provided with a shank (102) having a thrust surface (112) acted on by connecting means provided in a holder (20) which can be associated with the tool, the said tool being **characterized in that** it also has a bearing surface (152) which can interact with an opposing surface (48) of the tool socket (44) following the action exerted on the said thrust surface (112), forming a secure frictional connection of the tool (100) to the body (20) of the holder.

17. Tool according to Claim 16, comprising a neck (108) of the tool which extends along a longitudinal axis (JJ) of the said tool, in which the said neck has a chip removal channel (120).

18. Tool according to Claim 17, in which the said chip removal channel extends along the longitudinal channel (JJ) of the tool, narrowing from the end (106) of the tool remote from the shank (102) towards the said shank (102).

19. Tool according to Claim 18, in which the said chip removal channel terminates, at the end (106) of the tool (100) remote from the shank (102), in a concave surface (130) projecting towards a cutting edge (200) of the tool (100), forming a scraping claw (124).

20. Kit comprising at least one tool holder (20) according to Claim 1 and at least one tool (100) for machining according to Claim 16.
